(19) **Europäisches Patentamt**
**European Patent Office**
**Office européen des brevets**

(11) **EP 0 593 114 B1**

(12) **EUROPEAN PATENT SPECIFICATION**

(45) Date of publication and mention
of the grant of the patent:
**13.02.2002 Bulletin 2002/07**

(51) Int Cl.⁷: **H04N 1/46**

(21) Application number: **93202799.8**

(22) Date of filing: **01.10.1993**

(54) **Method of assigning a colour indication to picture elements in a colour reproduction system**

Verfahren zur Zuweisung einer Farbindikation zu Bildelementen in einem Farbeproduktionssystem

Procédé d'attribution d'une indication de couleur à des éléments d'image dans un système de reproduction en couleurs

(84) Designated Contracting States:
**DE FR GB NL**

(30) Priority: **12.10.1992 NL 9201761**

(43) Date of publication of application:
**20.04.1994 Bulletin 1994/16**

(73) Proprietor: **Océ-Technologies B.V.**
**5914 CC Venlo (NL)**

(72) Inventors:
• **Westdijk, Jacob Albert**
**NL-5912 HB Venlo (NL)**
• **Schonenberg, Jacobus Hendrikus Maria**
**NL-5941 JH Velden (NL)**
• **Sommer, Monique Gerardine Miranda**
**NL-5641 PP Eindhoven (NL)**
• **Onvlee, Johannes**
**NL-5211 DX 's-Hertogenbosch (NL)**

(74) Representative: **Hanneman, Henri W., Dr. et al**
**Océ-Technologies B.V. Patents & Information St.**
**Urbanusweg 43 P.O. Box 101**
**5900 MA Venlo (NL)**

(56) References cited:
**EP-A- 0 363 146**      **EP-A- 0 395 032**
**US-A- 4 841 361**

**Description**

The invention relates to a method of assigning an indication whether a picture element to be imaged with a colour reproduction system contains colour or no colour. The invention also relates to a colour reproduction system provided with means for generating colour information point by point, and provided with a picture processing and control unit for correcting and processing this colour information to give control signals for controlling a colour printing unit, said picture processing and control unit being adapted to perform such a method. In the reproduction of coloured information on information supports in a colour reproduction system, the problem arises as to the way in which pastel hues can be reproduced in a perceptually acceptable and yet economically viable way.

In proportion as the degree of saturation of a pastel colour decreases further in respect of a picture element to be reproduced, at some time a point will be reached at which it is perceptually no longer logical to reproduce as such but, instead, as grey information, the colour information associated with such a pastel colour. This also has the advantage that only the black reproduction unit is required to operate in the colour reproduction system, and not one or more other colour printing units as well, and this means cheaper operation of the system and reduced wear therein.

The boundary line to be drawn in a colour space to obtain a transition between achromatic and chromatic reproduction of the picture information should first be determined on perceptual and technological grounds. This problem has already been addressed in US-A-2 918 523. However, in this case, for the sake of simplicity, achromatic reproduction of pastel colours has been selected, although this does not give a satisfactory result. A picture element which perceptually will be considered as colourless and which is in the neighbourhood of the said boundary may, as a result of scanner imperfections (such as scanner noise), be detected, not as colourless, but as colour- bearing, or vice versa. This occurs particularly in the case of picture elements situated close to the transition from the colourless area to the colour- bearing area in the said colour space. An additional factor to be taken into account is that the scanner noise increases in proportion as the intensity of the picture element increases. It is therefore logical to distinguish in a colour space a kind of uncertainty area which includes parts situated on either side of the said boundary and in which, because of the possible occurrence of scanner noise, a picture element occurring there may not automatically be assigned a colour behaviour or a colourless behaviour on the basis of its parameter values, but only a provisional indication concerning an undefined colour behaviour.
Each picture element occurring in that uncertainty area must then be subjected to a further and more detailed test to arrive at an indication in respect of colour-bearing or colourless behaviour. Distinguishing between picture elements having an indication of colour behaviour, picture elements having an indication of colourless behaviour, and picture elements having a provisional indication concerning an undefined colour behaviour, is already known from EP-A-0 395 032. In the system described there, however, the entire area of picture elements with a provisional indication is sacrificed for the eliminat ion of register errors, a picture element becoming colourless in the case of a text picture, and having colour if a colour picture is involved. The elimination of scanner noise errors is therefore not addressed here.
Distinguishing between picture elements having an indication of colour behaviour, picture elements having an indication of colourless behaviour, and picture elements having a provisional indication concerning an undefined colour behaviour, is also known from EP-A-0 363 146 and EP-A-0 411 911, in which use is made of certain compa rison criteria which , however, are tested in a space derived from the RGB colour space and defined by the maximum and minimum colour component values in respect of a picture element in such colour space.
A method of this kind requires considerable computing work. The maximum and minimum colour component value must first be determined in respect of each picture element and then a set of mathematical inequality functions must be examined to define the area that picture element forms part of. For a picture element having a provisional indication concerning an undefined colour behaviour, an indication in respect of a colour-bearing or colourless behaviour is then determined in this patent publication by reference to an environmental analysis. The environmental analysis to be performed in these conditions means comparing the number of indications relating to colour behaviour in an environment (e.g. a 5 x 5 picture element space) around the associated picture element, with the number of indications relating to a colourless behaviour, the result thereof then indicating what type of indication must be assigned to the associated picture element.

An environmental analysis of this kind, however, is intended to trace and eliminate register errors but not to eliminate scanner noise errors. The said environmental analysis also has the disadvantage that it gives unreliable results in an area of soft pastel hues, since relatively few or no indications in respect of a colour behaviour or colourless behaviour occur in such an area. In an area of soft pastel hues this can result in rapid variations in the type of pertinent indications to be assigned to successive picture elements, although they may not be reproduced differently according to the original.

Also, in an area having soft pastel hues in which there are few picture elements with an indication, a small majority of one of the types of indications may, during the performance of the environmental analyses, cause the excess proportion of the provisional indications to be replaced by indications of the majority type, resulting in an incorrect colour impression.

The object of the invention is to provide a solution in respect of the said disadvantage relating to the fast variations in the pertinent indications, which can be designated "rapidly switching" in colour picture processing, and the invention is predicated on the principle that in such circumstances it is statistically advantageous, in underpinning an indication, not to rely or not to rely solely on indications occurring sporadically in the associated environment, but also or preferably on, for example, data which are related to directly connected measuring results or which have a close relationship thereto.

According to the invention, the method of the type described in the first sentence of this description comprises:

a. locating the said picture element within a colour space (LCH; HSL) being defined by parameters relating to saturation (C,S), intensity (L) and colour (H), on the basis of at least the parameter values of the said picture element related to colour saturation (C,S) and intensity (L), into either:

a first subspace being considered as an area where corresponding picture elements contain color,
a second subspace being considered as an area where corresponding picture elements contain no color,
a third subspace being considered as an uncertainty area where corresponding picture elements are uncertain in respect of containing colour or no colour;

b. assigning to the said picture element :

an indication of containing colour when located in said first subspace,
an indication of containing no colour when located in said second subspace, and
a provisional indication of uncertainty in respect of containing colour or no colour when located in said third subspace;

c. performing, in respect of the said picture element upon locating it in the said third subspace, an analysis of the distribution of parameter values of said subspace, of picture elements occurring in the neighbourhood of the said picture element,
the method being characterised, by

d. changing the provisional indication of the said picture element into an indication of color or of no color if at least:

a value ($\sigma$ (H), $\Sigma_i(H_{av}-H_i)^2$) representative of the distribution of the values of the parameter relating to colour (H) is respectively greater or less than a predetermined constant (f, f*) or alternatively if,
the average value (Cmean) of the parameter values related to colour saturation (C,S) is respectively greater or less than a certain threshold (b).

In a first aspect of the method according to the invention, a picture element located in the said uncertainty area is assigned an indication of colour behaviour if the relative distribution state of the parameter values related to colour in respect of the picture elements occurring in the said environment remains within predetermined limits and/or the average value of the parameter values related to colour saturation for the picture elements occurring in the said environment exceeds a certain threshold.

In a second aspect of the method according to the invention, a picture element located in the said uncertainty area is assigned a colour fulfilment degree which represents the expectation value of a picture element in respect of colour behaviour, and which can be based on an angle information, to be determined in the LC colour sub-space, associated with a straight line passing through the co-ordinate pair in that space representing the picture element and a predefined point in that space. In these conditions a picture element having a provisional indication is given a specific indication if the average value of the fulfilment degree in that environment is situated in the value area associated with that specific indication. Advantageously, the environmental analysis is based solely on those picture elements to which a partial colour fulfilment degree is assigned. It is also possible to make the indication of a picture element dependent on the total value of the colour fulfilment degree of the associated picture element and on a specific fraction of the average value of the colour fulfilment degree in that environment.

An extremely favourable use of the method according to the invention to eliminate scanner imperfections is obtained by either beforehand or simultaneously first eliminating the influences of the systematic errors, such as register errors, caused by the scanner. Since these are very disturbing at black-white transitions, as in the case of text, a test is carried out by reference to the original colour information in respect of each picture element whether such picture element has such a transition and in that case a picture element of this kind is assigned an indication of colourless behaviour. Many solutions are known for the detection of black-white transitions. As a criterion, for example, a transition of this kind is present at a picture element under investigation if a considerable brightness transition occurs around such picture element and such picture element is situated in an area of low colour saturation. According to the principle of the invention as described, a colour reproduction system is provided with:

a colour scanning unit (5) for scanning an original document to be reproduced and generating corresponding colour information,

a picture processing and control unit (6) for correcting and processing this colour information to give control signals for controlling a colour printing unit (7), said picture processing and control unit (6) being adapted to assign an indication wether a picture element to be printed with said colour printing unit (7) contains colour or no colour, the picture processing and control unit (6) comprising :

a. memory means (8) with information concerning an indication of the occurrence of colour at a picture element in a colour space (LCH, HSL)) being defined by parameters relating to saturation (C,S), intensity (L) and colour (H), on the basis of at least the parameter values of the said picture element related to colour saturation (C,S) and intensity (L), the memory means (8) able to distinguish :

an indication of a picture element containing colour if said picture element is situated in a first area within said colour space;

an indication of a picture element containing no colour if said picture element is situated in a second area within said colour space;

a provisional indication of uncertainty whether a picture element contains color or no color, when said picture element is situated in a third area within said colour space; characterised, in that, the picture processing and control unit (6) further comprises:

b. selection means (14) for selecting, in respect of each picture element, from said memory means (8) an indication whether a picture element contains colour and assigning such indication to the said picture element;

c. means (15) for selecting, in a predetermined neighbourhood of a picture element to which an indication of colour or of no colour must be assigned, the maximum and minimum parameter value related to colour (H) and calculating the difference $((\Delta H)_{max})$ between the two parameter values and calculating the average value for the parameter related to saturation(Cmean); and

means (16) for converting a provisional indication associated with a picture element into an indication of containing colour if said difference $((\Delta H)_{max})$ and/or said average value (Cmean) exceed predetermined limits.

The invention will now be explained using the perceptually arranged LCH colour space, although the invention can also be applied to other related colour spaces such as the HSL or CIELAB colour space.

The invention will now be described in detail with reference to the accompanying drawings wherein:

Fig. 1 represents a mathematically based graphical distribution of the picture elements concerning their perceptually assessed colour aspects in the LC colour sub-space;
Fig. 2 shows a distribution of the picture elements represented in Fig. 1 but based on other mathematical principles;
Fig. 3 shows a picture element raster required for performing the method;
Fig. 4 diagrammatically illustrates a possible embodiment of a part of a colour reproduction system; and
Fig. 5 diagrammatically illustrates a more practical embodiment of a part of a colour reproduction system.

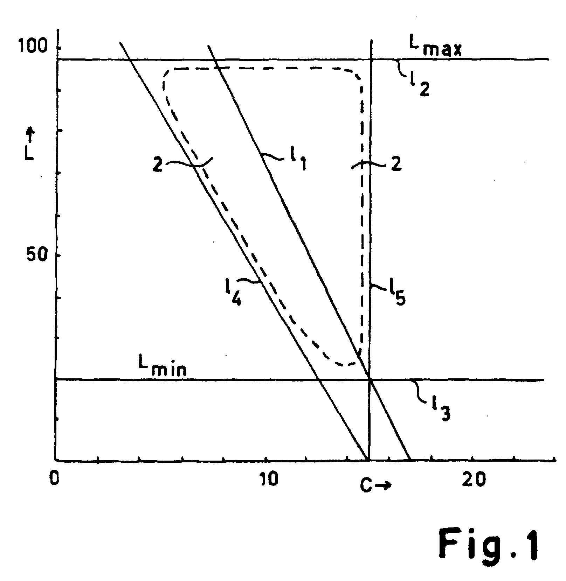

From perceptual observations made on colour reproductions produced by a colour reproduction system provided with a unit for scanning an original point by point and generating associated colour information, these reproductions may contain picture elements which must certainly be reproduced in colour in the reproduction process, while there are also picture elements which are logically reproduced as colourless and hence only with a certain grey value. A graphic representation of a distribution of these two types of picture elements in the LC space as a sub-space of a LCH colour space is represented in Fig. 1. In this Figure, reference I, denotes a parting line, to the picture elements on the left of which a colourless aspect is to be assigned, while a colour-bearing aspect is to be assigned to elements on the right of that line. The colourless or colour-bearing aspect of a picture element may be added in the form of a binary representation to the data string for the picture element.

For reasons of a perceptual nature it is also acceptable to consider picture elements having a luminance (or brightness) above a certain value $(L_{max})$ or having a luminance below a certain value $(L_{min})$ as colourless only. Accord-

ingly it is logical, in accordance with these principles, to effect analysis into the colour-bearing or colourless behaviour of the picture elements for the purposes of a correct copying process.

However, it is possible that due to scanning imperfections (such as scanner noise), a scanner attributes certain colour aspects to certain picture elements which perceptually should be considered as colourless. The converse also occurs for the same reason. In other words, Fig. 1 contains an area, denoted by reference 2, extending on either side of the parting line $I_1$, in which area picture elements of this kind occur and in which the colourless or colour-bearing behaviour of a picture element as perceived by the scanner may be termed unreliable. The magnitude and situation of this area 2 can be determined empirically.

Thus the degree of colour or colourlessness of a picture element and its reliability are defined as a function of its position in the LC sub-space. The scanner noise appears to be dependent on the luminance. In the case of light hues (high luminance), scanner noise and hence the uncertainty area are greater than in the case of darker hues (low luminance). The picture elements in the LC sub-space can therefore be divided into three categories as a result of the introduction of the uncertainty area 2, namely:

- picture elements having an indication of colourless behaviour;
  these elements occur in the area situated to the left of the parting line $I1$ not covered by area 2, and also in the area above the line $I_2 \equiv L = L_{max}$ and in the area below the line $I_3 \equiv L = L_{min}$,
- picture elements having an indication of colour behaviour (colour-bearing behaviour);
  these elements occur in the area situated to the right of the parting line $I1$ not covered by area 2, and not situated above the line $I_2 \equiv L = L_{max}$ or below the line $I_3 \equiv L = L_{min}$, and
- picture elements having a provisional indication concerning an undefined colour behaviour;
  these elements are situated in area 2.

A test to be performed in this way and designated an LC-test gives a distribution of the picture elements in accordance with the three kinds of indication. The last indication is provisional because it is intended that each picture element having such an indication will be assigned one of the two types of indication (colourless or colour-bearing) after a supplementary test. Each of the said indications can technically be assigned as a specific label to the associated picture element.

Whether an indication of colourless behaviour, an indication of colour behaviour, or a provisional indication of an undefined colour behaviour should be assigned to a picture element in an initial test can be determined by means of a memory (such as a "look up table"), in which the associated indication is recorded for each pair of picture element co-ordinates in the LC sub-space. This provides a rapid determination of the type of indication for each arbitrary picture element. Another possibility of determining the indication associated with a picture element is to imagine that the uncertainty area 2 in the LC sub-space is enclosed by a number of mathematically composed line elements. As shown in Fig. 1, this is possible, for example, by means of the line elements:

$$I_2 \equiv L = L_{max},$$

$$I_3 \equiv L = L_{min},$$

$$I_4 \equiv C = Co - d.L,$$

and

$$I_5 \equiv C = C1 - e.L.$$

Here, Co and C1 are suitably selected constants and d and e are suitably selected direction coefficients.

A picture element having the co-ordinate pair (L,C) is then assigned the provisional indication of an undefined colour behaviour if all the following conditions are satisfied:

$$L < L_{max},$$

$$L > L_{min},$$

$$C > Co - d.L,$$

and

$$C < C1 - e.L$$

A picture element is assigned the indication of colour behaviour if the following conditions are satisfied:

$$L < L_{max},$$

$$L > L_{min},$$

and

$$C \geq = C1 - e.L$$

The other elements receive the indication of colourless behaviour. The supplementary test for assigning the colourless or colour-behavior indication to a picture element in area 2 can be performed as an environmental analysis, in which, in an environment of this picture element considered as the central picture element, it is possible to determine by reference to specific characteristics of said surrounding elements whether the central picture element should be assigned an indication of colourless behaviour or an indication of a colour behaviour.

A first method of processing picture information for such environmental analysis is based on the principle that a duster of identical picture elements which actually merit the predicate "purely colourless" are - as a result of scanner imperfections such as scanner noise - nevertheless assigned colour or hue values which, apart from systematic deviations in the detection capacity, occur stochastically around the grey value axis or L axis in the LCH space and are therefore distributed over the entire or substantially entire colour or hue range. However, the further a cluster of identical picture elements is situated away from the grey value axis and hence should increasingly be considered as colour-bearing, so a systematic contribution of a certain colour or hue value must be added vectorially to the said stochastically distributed colour or hue values. This in turn has the effect that in proportion as a cluster of identical picture elements is situated further away from the grey value axis, so the aperture angle at which a cluster is viewed from the grey value axis (L = 0 and C = 0) decreases. The standard deviation in the measured colour or hue values as a result of scanner noise will then also decrease. However, in proportion as a cluster of picture elements is situated closer to the grey value axis, there will be an increase in the standard deviation around the average colour or hue value. Thus when the standard deviation appears to be greater than a certain constant f, it may be assumed that it is apposite to assign the indication of colourless behaviour to the central picture element. Expressed as a formula, this analysis, which may be designated a "hue test", yields the following:

$$\sigma (H) > f$$

If this condition is satisfied, there is a real likelihood that the central picture element is colourless. A cluster of picture elements for such environmental analysis may, for example, consist of the picture elements of an nxn raster, e.g. a 5x5 raster around the central picture element under test. Instead of calculating $\sigma (H)$, it is possible simply to calculate the sum of the moments as constituents of the standard deviation. Expressed as a formula the following then applies:

$$\sum_i (\bar{H} - H_i)^2 > f*$$

where $H_i$ represents the hue value of the $i^{th}$ picture element, $\bar{H}$ is the average hue value in this distribution, and f* is a suitably selected constant derived from f. The standard deviation also forms a measure of the width of a normal distribution. For a normal distribution of this kind, 97% of the picture elements is situated in an area having a width equal to six times the standard deviation ($6\sigma$) and being situated around the average. On this basis, it may be assumed that if the distribution of the measured colour or hue values of a cluster of picture elements remains below the limit 6f, there may be said to be a colour behaviour of the central picture element of this cluster. Expressed as a formula this becomes:

$$(\Delta H)_{max} < 6f$$

This derived criterion therefore forms a second method of processing picture element information in accordance with the principle of the invention, this being preferred to the criterion relating to standard deviation, for implementation reasons.

In a third method of processing picture element information in accordance with the principle of the invention, a supplementary requirement is included in order to make more reliable the decision as to assigning or not assigning a colourless aspect to the central picture element. For this purpose, a test must be made whether the picture elements in the said cluster around said picture element have an average colour saturation value (chroma value or saturation value) greater than a certain constant b. This yields the formula:

$$(\Delta H)_{max} < 6f \text{ and } C\text{-mean} > b.$$

If this condition is satisfied, the central picture element is assigned an indication of colour behaviour. If, on the other hand, either of the two conditions is not satisfied, then the picture element may be said to have colourless behaviour. Another way of determining, in an LC test, whether a picture element situated in the uncertainty area should be given the indication of colourless behaviour or colour behaviour, is based on applying the principles of fuzzy logic, and is founded based on the principle that in proportion as a picture element is closer to the area of the colour-bearing picture elements such picture element in all probability has a higher degree of colour potency, which will hereinafter be referred to as "colour fulfilment degree" (COLfd).

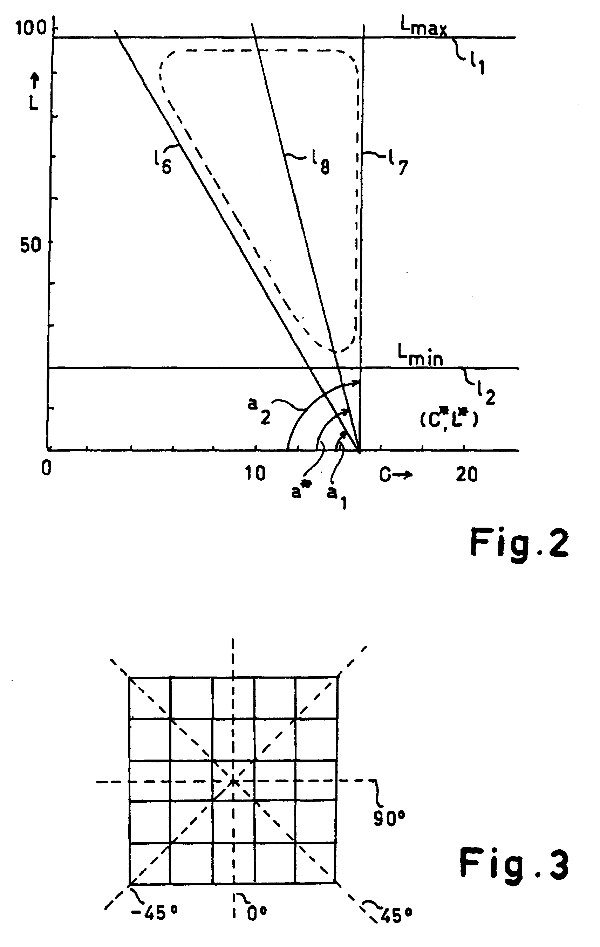

A possible development of this idea is shown in Fig. 2, in which two parting lines $I_6$ and $I_7$ are drawn in the LC sub-space along and on either side of the uncertainty area 2. When $I_6$ as a parting line between the colourless area and the uncertainty area forms an angle $a_1$ with the negative C-axis and the intersection of $I_6$ and $I_7$ is given by (C*, L*), then $I_6$ can be reproduced by the equation:

$$I_6 \equiv L^* - tg(a_1).(C-C^*)$$

Similarly, line $I_7$ by:

$$I_7 \equiv L^* - tg(a_2).(C-C^*)$$

where $a_2$ is the angle made by line $I_7$ and the negative C-axis. These two lines form part of a bunch of lines which are mathematically described by $I_8 \equiv L^* - tg(a).(C-C^*)$. In practice, it may be stated that: $I_6 = I_4$ and $I_7 = I_5$. If a picture element is situated on the left of the line $I_6$, in which case, therefore, $a < a_1$, this picture element is as signed a COLfd of 0 because of the colourless character, and this therefore represents an indication of colourless behaviour. On the other hand, a picture element situated on the right of the line $I_7$, and for which, therefore, $a > a_2$, is assigned a COLfd of 1 because of the colour-bearing character of this picture element. This represents an indication of colour behaviour. However, a picture element situated between the lines $I_6$ and $I_7$ and situated on line $I_8$ with a directional coefficient tg (a*) from the line bunch, is assigned a partial fulfilment degree COLfd of $(a^* - a_1)/(a_2 - a_1)$, representing a provisional indication of undefined colour behaviour.

It follows from this that each picture element in the LC sub-space is assigned a fulfilment degree situated in the segment [0, 1]. In this connection it should be noted that the fulfilment degree COLfd is 0 in the case of the colourlessness of the picture elements having $L > L_{max}$ and those having $L < L_{min}$.

Although it is possible to calculate the associated directional coefficient a*, and from that the COLfd value by reference to the measured L and C co-ordinates for each picture element, quicker determination of the COLfd value is obtained by means of a memory unit such as a look up table, which directly yields the associated COLfd value for each pair of L and C co-ordinates to be supplied.

Just as was the case in the previous embodiments, here again it is necessary to replace the provisional picture element indications by definite indications, and this is possible by two methods of processing picture element information in accordance with the principle of the invention as described in detail hereinafter.

According to a fourth method of processing picture element information, in an environment (for example a 5x5 picture element raster) around a picture element to be designated the central picture element, the average is calculated of the COLfd values of all the picture elements situated around the central picture element as far as they originally had or still have at least a provisional indication, and hence have COLfd values situated in the interval (0, 1).

$$\text{Expressed as formula: } \overline{COLfd} = \frac{1}{N} \cdot \sum_{\substack{i=1 \\ i \neq 13}}^{25} (COLfd)_i$$

for $(COLfd)_i \neq 0$ nor 1
and N = number of picture elements with $(COLfd)_i \neq 0$ nor 1

If this average COLfd value is above 0.5 or equal to 0.5, then the central picture element is assigned an indication of colour behaviour to replace its provisional indication; if, however, said average value is below 0.5, then the central picture element receives an indication of colourless behaviour.

According to a fifth method of processing picture information, an average of the COLfd values is again calculated, and then a certain fraction k of this average $\overline{COLfd}$ is added to the COLfd value of the central picture element (with index 13), whereafter the resulting value is normalized by a factor 1/(1+k) to give an end value COLfd* to the central picture element with

$$(COLfd^*)_{13} = \frac{(COLfd)_{13} + k.\overline{COLfd}}{k+1}$$

If this end value is above 0.5, then the central picture element is assigned an indication of a colour behaviour; otherwise an indication of a colourless behaviour.

There are picture elements in the uncertainty area which, on the basis of the foregoing, are considered as colour-bearing whereas in fact they should have been considered as colourless. This concerns picture elements at the edges of black-white transitions and which, as a result of register errors in a colour scanner exhibit a colour tinge along said transitions. Register errors are the result of the fact that the separate measurements for the different colour co-ordinates R, G and B do not take place at exactly the same point as a result of the true geometry of the colour-CCD. This is virtually not striking in an even (coloured) surface, but it is at the edges in the case of colour transitions and even more in the case of black-white transitions. The latter then results in situations in which a method of processing picture element information as already discussed recognises colour at black-white edges. This type of colour behaviour should be considered a systematic deviation of the scanner process and not as a result of a stochastic process in the scanner. It is accordingly advantageous if picture elements having the picture errors due to this type of colour tinge are selected for their systematic character prior to or simultaneously with a picture element information processing method as described above, and to decide on whether or not there is a colourless behaviour in respect of these picture elements with suitable criteria, in such manner that at least as many black-white edges with a colour tinge as possible are replaced by ideal black-white edges. Thus for each picture element it is necessary to check by reference to the original colour information whether there is such a transition present at that picture element and if so a picture element of this kind is assigned an indication of colourless behaviour. A number of methods are known for this purpose from the prior art, some of which are given in US-A-4 415 920, EP-A-0 349 780, EP-A-0 369 720 and EP-A-0 411 911.

A particularly favourable method is based on the principle that there is a considerable brightness transition around such a picture element and that such a picture element is situated in an area of low colour saturation. An algorithm adapted to this comprises two steps: during the first step a check is made whether the central picture element forms part of an edge, with a sufficiently strong brightness transition, and this is therefore anticipatory of the presence of a black- white transition. A check is also made as to the direction in which this edge is situated. For this purpose, in a raster of, for example, 5x5 picture elements, four standard edges with different orientations are assumed around the central picture element as shown in Fig. 3. The first edge or the 0-degree edge extends vertically through the raster;

the second edge or 90-degree edge extends horizontally through the raster; the third edge or 45-degree edge extends from the top left-hand comer to the bottom right-hand corner; and the fourth edge or 45-degree edge extends from the bottom left-hand corner to the top right-hand corner. Each standard edge gives a division of the raster into two sub-rasters, and for each of the sub-rasters the maximum and minimum brightness values (or intensity values) of the picture elements occurring therein are determined . Advantageously, the picture elements situated on an edge are not included in the determination of the brightness value in such a sub-raster. Of all the standard edges, that edge is selected where the difference between the maximum brightness value of one sub-raster and the minimum brightness value of the other sub-raster is greatest. A check is then made in respect of the selected edge as to whether the said difference between the maximum and minimum brightness value is greater than a certain boundary value g.

Expressed as a formula: $(\Delta L)max > g$

Only if that is the case the selected standard edge is considered as a potential black-white edge, since there are usually no considerable variations in luminance in the case of a colour edge transition. If the said difference is not greater than the boundary value g, the test for a black-white edge for that picture element is terminated and it is therefore assumed that this picture element does not form part of a black- white edge. If a standard edge is considered as a potential black-white edge, the second step is started. In the second step, the average chroma value (Cmean1; Cmean2) is determined for that potential edge in each of the two sub-rasters, and from this an assessment is made as to whether there is a colour tinge present. Here again it is advantageous not to include in the determination of the average chroma value those picture elements which are situated on said potential edge. If the average chroma value of each of two sub-rasters remains below a certain boundary value h, hence Cmean1 < h and Cmean2 < h, it may reasonably be assumed that there is little or no colour present here and that the potential edge may be considered as a true black-white edge. The central picture element in question is then considered colourless (with chroma value 0). In order to obtain more certainty as to the presence of a black-white transition, the following can be tested a supplementary requirement: | Cmean1 - Cmean2 | < n, where n is a constant.

Perceptually, however, an undesirable edge black replacement in the case of colour surfaces having weak saturation and for certain colour transitions from background to colour, has no disturbing influence on the entire result.

From the aspect of technical considerations, it is preferable for a picture element which is thus considered as colourless to be additively assigned a separate label (bit) and not to have it operate as a substituent of the original measured value, since this measured value may later be important for a subsequent analysis into colourless behaviour or colour behaviour of neighbouring picture elements.

The picture elements which are not designated colourless on the basis of the edge black replacement algorithm should then be subjected to an analysis for colourless behaviour or colour behaviour in accordance with one of the picture information processing methods discussed in connection with Figs. 1 and 2.

Despite the use of the black edge replacement algorithm and carrying out the analysis as to colourless behaviour or colour behaviour on the picture elements, it may happen that some picture elements are nevertheless still wrongly considered colourless or colour-bearing where an opposite designation would be correct. This is because compromises must always be made in respect of the ideal processing when determining the critical values applied. In particular, in the case of black-white transitions, picture elements with a specific colour may be left over as a result of register errors.

Picture elements of this kind having an incorrect classification are then re-tested with a post- processing algorithm. According to this algorithm, a picture element considered to have colour behaviour can be rendered colourless if, for example, many picture elements having an indication of colourless behaviour occur in a certain environment of such picture element (and hence few picture elements having an indication of colour behaviour, e.g. less than 10%), and the luminance contrast is high (something which again appeals to the occurrence of black-white text in the environment of the picture element under test). The said environment in which this post-processing algorithm is operative is formed by a picture element raster which can be made fairly large, e.g. a 16x16 raster or even better 25x25 raster.

In accordance with this principle, it is logical if a picture element considered to have colour behaviour is made colourless in the case of the latter raster if the following equation is satisfied:

$$\sum_{i=1}^{625} k_i < 63 \quad \text{and} \quad (\Delta L)_{max} > g$$

where g is a constant. Here k = 1 or 0 if the ith picture element has colour behaviour or colourless behaviour respectively.

A favourable result is also obtained if this post- processing algorithm is carried out in a 25x25 raster with half the resolution.

Although determination of the formula

$$\sum_{i=1}^{625} k_i < 63$$

actually involves colourless picture elements, it makes little or no difference in practice to include picture elements with colour behaviour for the sake of simplicity. This provides a saving of one picture element selection mechanism. Instead of $(\Delta L)_{max} > g$

an alternative criterion can be used with good results and better implementation possibilities, namely: it is necessary to satisfy the two requirements that there should be a minimum number of picture elements with a luminance above a certain high threshold and a minimum number of picture elements with a luminance below a certain low threshold. A post-processing algorithm can also be used for an operation in the reverse direction, i.e. to give an indication of colour behaviour to a colourless picture element in a substantially coloured environment in order to obtain better uniformity in the colour reproduction.

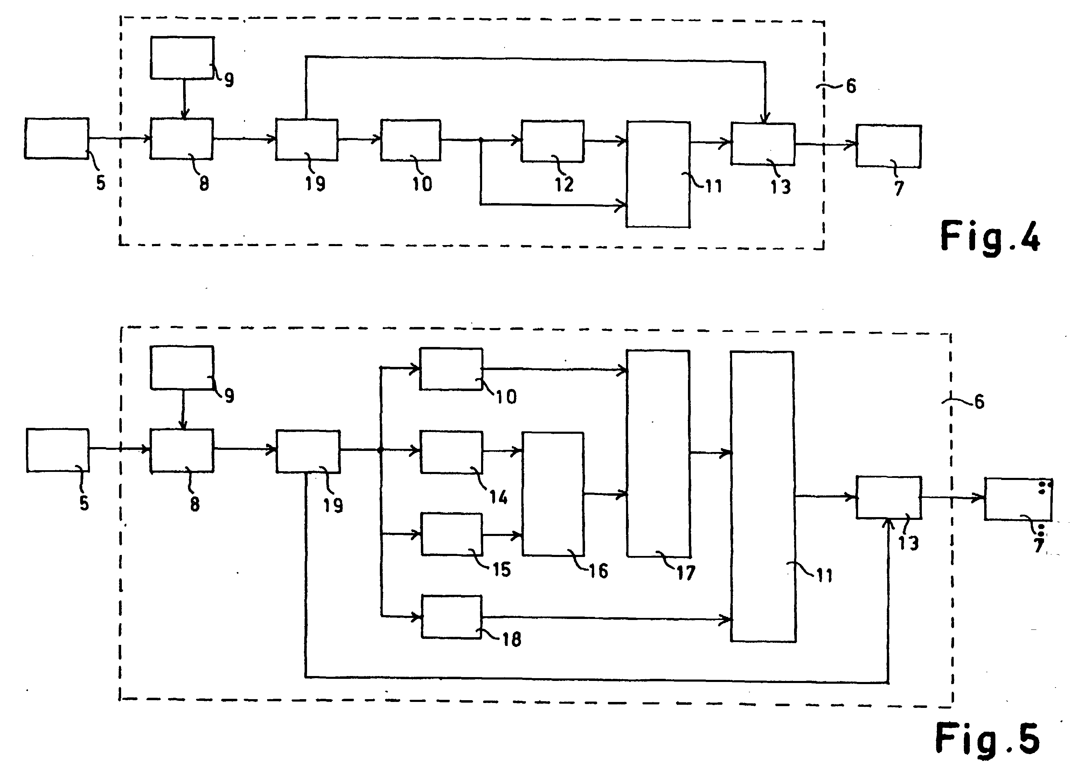

Fig. 4 diagrammatically illustrates an embodiment of part of a colour reproduction system provided with a colour scanner or colour scanning unit 5 for scanning an original point by point and generating associated colour information.

In this, light intensity measurements are carried out by means of a scanner for every scanned point on the successive scanning lines of the original subjected to exposure, and after a number of corrective system steps and picture processing steps have been performed the measurements are suitable for conversion to control signals for the colour printing units of the colour copier, or other colour reproducing means such as a "flying spot scanner".

Scanners usable for performing the method of the invention are indicated throughout by the English term "line scanner". This does not mean that a "line scanner" must consist of a single row of light- sensitive elements. Reasons associated with 'manufacturing technology and financial considerations have often led to other embodiments of scanning means being developed which with some adaptation are considered suitable for measuring intensity signals line by line and for each scanned point for each desired colour component. Some embodiments of scanning means suitable for the purpose are known from GB-A-2 157 114, US-A-4 553 160, US-A-4 750 048 and US-A-4 866 512.

In principle, the "area-scanners" can also be used for performing the method according to the invention, it being possible to perform the steps according to the invention in two ways, in the case of the parallel reading out of the line arrays: on the one hand it is possible from a memory in which the read-out intensity information for each scanned point and for each colour component is first stored. On the other hand, during the reading out of the intensity information the method according to the invention can be performed by performing the method line by line in a direction at right angles to the read-out direction of the line arrays. The successively arranged line arrays thus each deliver the intensity information of a single scanned point, and this is then used to determine the white reference value for each scanned point and each colour component for the line defined by the scanned points.

Instead of scanner it is also possible to use a receiving unit forming part of a communication system (e.g. a facsimile system). The colour reproduction system is also provided with a picture processing and control unit 6 for correcting this colour information, the assessment regarding colour behaviour or colourless behaviour taking place for each picture element. The picture processing and control unit 6 is also suitable for processing colour information obtained via the correction phase in order to produce control signals for controlling a colour printing unit 7 adapted to multi-colour printing. For each picture element, the colour components R, G, B measured by a scanner 5 are converted to the LCH colour system in unit 8. During this conversion, the R, G and B co-ordinates are first converted to the XYZ colour space via a matrix multiplier, the matrix coefficients of which are scanner-dependent. A conversion to the CIELAB system then takes place in the manner described in R.W.G. Hunt: "The Reproduction of Colour in Photography, Printing & Television"; Fountain Press, England, 4th edition, para. 8.8. The data concerning the (white) reference point associated with the background of the original must be taken into account in this case, such data being delivered by unit 9.

The conversion then takes place to the LCH colour system as described in the said book by Hunt.

The white reference point should be determined accurately, since otherwise the grey value axis will be incorrectly determined in the LCH colour system so that the uncertainty area with the provisional indications of possible colourless or colour behaviour will be incorrectly disposed in the LCH colour system with adverse consequences in respect of the colour/colourless investigation of the picture elements. Determining the white reference point is described in detail in: GB-A-1 541 578, EP-A-0 188 193, NL-A-9101 301 and NL-A-9101 894. Of course, when facsimile equipment is used which receives the picture information in the required colour system, the LCH system in this case, the units 8 and 9 are kept out of the operational part of the system. Information concerning the said indications relating to colour behaviour, colourless behaviour or undefined colour behaviour are then added to each picture element in unit 8. For this purpose, unit 8 comprises memory means, e.g. a look up table, with positional data defined in the LCH space in respect of the various indications concerning colour behaviour. Before the further analysis into colour behaviour is performed, a check must first be made whether the colour parameter values supplied for each picture element actually are situated within the colour reproduction space of the colour printing unit 7. If this is not so, the colour parameter values of the associated picture elements should be transformed to the colour reproduction space of the colour printing unit 7. This can be done by "clipping" the parameter values, the transformation being so effected that the parameter values obtainable are situated on the envelope of the said colour reproduction space.

Instead of clipping, it is also possible to compress colour parameter values, although this has adverse effects, for example in the case of the repeated copying of generation copies, and which are also related to the position of the uncertainty area 2. The said transformation takes place in unit 19. Of course the parameter values originally situated outside the enveloping edge will without difficulty be given an indication of colour behaviour, and this need not be discussed further in connection with tracing and eliminating register errors. The transformed parameter values can be fed directly with the associated indication to a unit 13 in which the usual picture processing steps, such as UCR and half toning, and determination of control data for the colour printing unit 7, take place.

The picture elements are then fed successively to a unit 10 in which the picture elements with colour parameter values not subjected to the said transformation in unit 19 are subjected to the algorithm for the elimination of register errors.

The picture elements which as a result of this algorithm have been given a chroma value 0 in unit 10 are no longer tested by analysis into colour behaviour or colourless behaviour. The colourless label of such a picture element is made directly available to unit 11 for the post-processing algorithm. The L, C and H values originally associated with that picture element are indeed fed to a unit 12 for analysis of colour behaviour or colourless behaviour, since these values may still be of importance to investigation at neighbouring picture elements. In unit 12 the picture elements to be investigated are subjected to analysis to determine an indication concerning colourless or colour behaviour. Each picture element which has not yet been given a colourless label with chroma value 0 on the basis of the edge black replacement algorithm is here given a label regarding the indication of colourless behaviour or colour behaviour. In other words, a picture element is only assigned an indication of colourless behaviour to replace any other indication if such picture element has at least one indication which is colourless.

Each picture element is then offered to unit 11 for the post-processing algorithm either with the colourless label obtained by unit 10 or with a label obtained by unit 12, and a number of labels having the indication of colour behaviour are corrected to that of colourless behaviour. Of course each picture element having a colourless label assigned also receives a chroma value or saturation value of 0. After a label indicating a colour or colourless behaviour has been assigned to each picture element, further processing on the picture elements, e.g. UCR and half toning, and the determination of control data as required and conventional for the colour printing unit 7, can take place in the unit 13 connected to unit 11.

Of course, for the purpose of the processing operations on raster picture elements or for determining control data, which take place in the units of the picture processing and control unit 6, the buffer memory means required for those rasters are present in those units. It is also permissible to operate the post-processing algorithm with half the resolution so that in fact a simplified calculation is obtained for the algorithm.

It is not necessary to perform the process steps in sequence as shown in Fig. 4. A more practical approach of the process events is obtained if a number of process steps are performed independently of one another and to some extent simultaneously as shown in the picture processing and control unit illustrated in Fig. 5. Thus labelling according to the algorithm for the elimination of register errors in unit 10, determination of a colour label, colourless label or provisional label for undefined colour behaviour in unit 14, and the "hue test" analysis in unit 15 can take place as parallel processes. A unit 16 receives and processes the results of the data to be supplied by units 14 and 15, in such manner that the data element of unit 14 is maintained if it relates to a colour label or colourless label, but when it relates to a provisional label with undefined colour behaviour the result of unit 15 is taken over as a substituent data element. A unit 17 receives the data from units 10 and 16 and replaces a colour behaviour label delivered by unit 16 by a colourless behaviour label only if unit 10 detects that the associated picture element must be colourless. A unit 18 is also present which for the purpose of the unit 11 operating in accordance with the post-processing algorithm is adapted to investigate the condition:

$$(\Delta L)_{max} \geq g$$

in respect of a given picture element in an added raster, or the alternative criterion already mentioned in this connection. The result of this test together with the result of unit 17 is fed to unit 11, which operates in accordance with the post-processing algorithm, in which for each picture element the final result is determined in respect of a colour label or colourless label.

The data delivered by unit 11 are then corrected and processed in unit 13 to give control signals for controlling a colour printing unit 7. The units not referred to in connection with this Figure have a corresponding operation to those indicated by the same reference numeral in Fig. 4.

Some methods of processing picture information in accordance with the principle of the invention deliver such good results that it is permissible to omit the post-processing algorithm. In that case unit 11 acts as a kind of combination circuit which always allows an indication of colourless behaviour generated by unit 10 to pass, and, in the event of unit 10 not generating such indication, unit 11 allows the result of processing in unit 12 to pass.

The invention has been described above by reference to the LCH colour space. However, of course, the principle of the invention is not restricted to this colour space, but is also applicable to colour spaces defined by parameters related to the parameters of the LCH colour space.

The principle of the invention has been described by reference to a single LC sub-space, and this is independent of the actual H value of a picture element to be examined. Perceptual observations show that a refinement of the invention in respect of the LC test is obtained by performing this LC test in colour- dependent manner. From practical considerations, however, it is impracticable to provide for each hue value a separate LC sub-space with an adapted distribution of the sub-space into the three areas. Instead, an LC sub-space for each hue value with an adapted distribution of that sub-space in the three areas is created for a number (n) of specific hue values. A separate Fig. 1 or Fig. 2 can then be added to each of these LC sub-spaces, in which the lines $I_1$ to $I_8$ occur with associated specific parameters. An applicable value could now be: n = 16. With regard to assigning one of the types of indications, a Figure of this kind not only governs the associated hue value but also picture elements with hue values situated in an area around such a specific hue value. In performing an LC test for a certain picture element it is necessary first to establish the hue area that that picture element belongs to and hence which LC sub-space is applicable to that picture element. The associated indication in respect of any colour behaviour or the colour fulfilment degree must then be determined from the associated Fig. 1 or Fig. 2. This is possible, for example, by means of a look up table which delivers the associated indication or colour fulfilment degree to an LCH combination to be supplied.

It is also possible to apply the principle of the invention to an open colour copying system in which picture information is transmitted from one or more external signal sources via a transmission system to the picture processing and control unit 6 of a colour printing unit 7. In Figs. 4 and 5, unit 5 then acts as the said signal source.

If the signal source delivers the picture information in the required colour system, the LCH system in this case, the colour conversion to be performed by units 8 and 9 by reference to a (white point) reference value should be carried out beside the said signal source 5. If the picture processing and control unit 6 receives picture element information for each picture element comprising in addition to the associated colour parameter values just an indication (or label) regarding a colour behaviour or colourless behaviour, then the picture element should be tested, on the receiving side of the picture processing and control unit, for any possible occurrence in the uncertainty area, in order to assign the picture element a provisional indication regarding an undefined colour behaviour instead of the indication obtained.

For this purpose, the picture processing and control unit should be provided with at least the following:

- memory means with positional data concerning a sub-space within the colour space applied, such sub-space being considered an uncertainty area in respect of colour behaviour;
- selection means for selecting a picture element having positional data within the said uncertainty area by means of the said memory means;
- means for performing an environmental analysis concerning the distribution state of parameter values related to the said colour space in respect of picture elements occurring within a defined environment of the said picture element; and
- means for assigning an indication on the basis of the results of the environmental analysis performed in respect of the said picture element.

## Claims

1. A method of assigning an indication whether a picture element to be imaged with a colour reproduction system contains colour or no colour,

    the method comprising:

        a. locating the said picture element within a colour space (LCH; HSL) being defined by parameters relating to saturation (C,S), intensity (L) and colour (H), on the basis of at least the parameter values of the said picture element related to colour saturation (C,S) and intensity (L), into either:

a first subspace being considered as an area where corresponding picture elements contain color,
a second subspace being considered as an area where corresponding picture elements contain no color,
a third subspace being considered as an uncertainty area where corresponding picture elements are uncertain in respect of containing colour or no colour;

b. assigning to the said picture element:

an indication of containing colour when located in said first subspace,
an indication of containing no colour when located in said second subspace, and
a provisional indication of uncertainty in respect of containing colour or no colour when located in said third subspace;

c. performing, in respect of the said picture element upon locating it in the said third subspace, an analysis of the distribution of parameter values of said subspace, of picture elements occurring in the neighbourhood of the said picture element,

the method being **characterised, by**

d. changing the provisional indication of the said picture element into an indication of color or of no color if at least:

a value ($\sigma$ (H), $\Sigma_i(H_{av}-H_i)^2$) representative of the distribution of the values of the parameter relating to colour (H) is respectively greater or less than a predetermined constant (f, f*) or alternatively if, the average value (Cmean) of the parameter values related to colour saturation (C,S) is respectively greater or less than a certain threshold (b).

2. A method according to claim 1, **characterised in that**,

said relative distribution state is a standard deviation ($\sigma$ (H)) of the parameter values related to colour (H) of pixel elements occuring in the neighbourhood of said picture element and said predetermined limit is a suitably selected constant (f).

3. A method according to claim 2, **characterised in that**, said standard deviation is given by

$\Sigma_i (H_{av}-H_i)^2$ with $H_i$ the colour value of the ith picture element in said environment, $H_{av}$ the avarage colour value of all I picture elements in said environment.

4. A colour reproduction system provided with

a colour scanning unit (5) for scanning an original document to be reproduced and generating corresponding colour information,
a picture processing and control unit (6) for correcting and processing this colour information to give control signals for controlling a colour printing unit (7), said picture processing and control unit (6) being adapted to assign an indication wether a picture element to be printed with said colour printing unit (7) contains colour or no colour, the picture processing and control unit (6) comprising :

a. memory means (8) with information concerning an indication of the occurrence of colour at a picture element in a colour space (LCH, HSL)) being defined by parameters relating to saturation (C,S), intensity (L) and colour (H), on the basis of at least the parameter values of the said picture element related to colour saturation (C,S) and intensity (L), the memory means (8) able to distinguish :

an indication of a picture element containing colour if said picture element is situated in a first area within said colour space;
an indication of a picture element containing no colour if said picture element is situated in a second area within said colour space;

a provisional indication of uncertainty whether a picture element contains color or no color, when said picture element is situated in a third area within said colour space; **characterised, in that**, the picture processing and control unit (6) further comprises:

b. selection means (14) for selecting, in respect of each picture element, from said memory means (8) an indication whether a picture element contains colour and assigning such indication to the said picture element;

c. means (15) for selecting, in a predetermined neighbourhood of a picture element to which an indication of colour or of no colour must be assigned, the maximum and minimum parameter value related to colour (H) and calculating the difference $((\Delta H)_{max})$ between the two parameter values and calculating the average value for the parameter related to saturation(Cmean); and

means (16) for converting a provisional indication associated with a picture element into an indication of containing colour if said difference $((\Delta H)_{max})$ and/or said average value (Cmean) exceed predetermined limits.

**Patentansprüche**

1. Verfahren zum Zuweisen einer Indikation, ob ein mit einem Farbreproduktionssystem abzubildendes Bildelement Farbe enthält oder nicht, mit:

a. Einordnen des Bildelements in einem Farbraum (LCH; HSL), der durch Parameter definiert ist, die sich auf die Sättigung (C, S), die Intensität (L) und den Farbton (H) beziehen, auf der Grundlage wenigstens der Parameterwerte dieses Bildelements, die sich auf die Farbsättigung (C, S) und die Intensität (L) beziehen, in entweder:

einen ersten Teilraum, der als ein Bereich betrachtet wird, in dem die betreffenden Bildelemente Farbe enthalten,
einen zweiten Teilraum, der als ein Bereich betrachtet wird, in dem die betreffenden Bildelemente keine Farbe enthalten, oder
einen dritten Teilraum, der als ein Unbestimmtheitsbereich betrachtet wird, in dem es ungewiß ist, ob die betreffenden Bildelemente Farbe enthalten oder nicht;

b. Zuweisen zu dem Bildelement:

eine Indikation dafür, daß es Farbe enthält, wenn es in dem ersten Teilraum liegt,
eine Indikation dafür, daß es keine Farbe enthält, wenn es in dem zweiten Teilraum liegt, und
eine provisorische Indikation für die Ungewißheit in Bezug darauf, ob es Farbe enthält oder nicht, wenn es in dem dritten Teilraum liegt;

c. Ausführen, in Bezug auf das Bildelement nach Einordnung in den dritten Teilraum, einer Analyse der Verteilung von Parameterwerten dieses Teilraumes von Bildelementen, die in der Nachbarschaft des genannten Bildelements liegen,
    **gekennzeichnet durch**
d. Ändern der provisorischen Indikation für das Bildelement in eine Indikation für Farbe oder keine Farbe, wenn wenigstens:

ein für die Verteilung der Werte des Parameters, der sich auf den Farbton (H) bezieht, repräsentativer Wert $(\sigma(H), \Sigma_i(H_{av} - H_i)^2)$ größer bzw. kleiner als eine vorgegebene Konstante (f, f*) ist oder, alternativ, wenn der Mittelwert (Cmean) der Parameterwerte, die sich auf die Farbsättigung (C, S) beziehen, größer bzw. kleiner als ein bestimmter Schwellenwert (b) ist.

2. Verfahren nach Anspruch 1, **dadurch gekennzeichnet, daß**

der relative Verteilungszustand eine Standardabweichung $(\sigma(H))$ der auf den Farbton (H) bezogenen Parameterwerte von Bildelementen ist, die in der Nachbarschaft des genannten Bildelements liegen, und der vorbestimmte Grenzwert eine geeignet gewählte Konstante (f) ist.

3.  Verfahren nach Anspruch 2, **dadurch gekennzeichnet, daß** die Standardabweichung gegeben ist durch

$\Sigma_i(H_{av} - H_i)^2$, wobei $H_i$ der Farbtonwert des i-ten Bildelementes in der genannten Umgebung ist und $H_{av}$ der mittlere Farbtonwert aller i-Bildelemente in dieser Umgebung ist.

4.  Farbreproduktionssystem mit

einer Farbscaneinheit (5) zum Scannen eines zu reproduzierenden Originaldokuments und zum Erzeugen entsprechender Farbinformation,
einer Bildverarbeitungs- und Steuereinheit (6) zur Korrektur und Verarbeitung dieser Farbinformation zur Bildung von Steuersignalen für die Ansteuerung einer Farbdruckeinheit (7), wobei die Bildverarbeitungs- und Steuereinheit (6) dazu ausgebildet ist, eine Indikation zuzuweisen, ob ein mit der Farbdruckeinheit (7) zu druckendes Bildelement Farbe oder keine Farbe enthält, wobei die Bildverarbeitungs- und Steuereinheit (6) aufweist:

a. eine Speichereinrichtung (8) mit Information über eine Indikation für das Auftreten von Farbe bei einem Bildelement in einem Farbraum (LCH, HSL), der durch Parameter definiert ist, die sich auf die Sättigung (C. S), die Intensität (L) und den Farbton (H) beziehen, auf der Grundlage wenigstens der Parameterwerte dieses Bildelements, die sich auf die Farbsättigung (C, S) und die Intensität (L) beziehen, wobei die Speichereinrichtung (8) in der Lage ist, zu unterscheiden:

eine Indikation für ein Bildelement, das Farbe enthält, wenn dieses Bildelement in einem ersten Bereich innerhalb des Farbraumes liegt,

eine Indikation für ein Bildelement, das keine Farbe enthält, wenn dieses Bildelement innerhalb eines zweiten Bereiches in dem Farbraum liegt,

eine provisorische Indikation für Unbestimmtheit, ob ein Bildelement Farbe enthält oder nicht, wenn dieses Bildelement in einem dritten Bereich innerhalb des Farbraumes liegt, **dadurch gekennzeichnet, daß** die Bildverarbeitungs- und Steuereinheit (6) weiterhin aufweist:

b. eine Auswahleinrichtung (14) zum Auswählen aus der Speichereinrichtung (8), in Bezug auf jedes Bildelement, einer Indikation, ob ein Bildelement Farbe enthält, und zum Zuweisen einer solchen Indikation zu diesem Bildelement,

c. eine Einrichtung (15) zum Auswählen, in einer vorbestimmten Nachbarschaft eines Bildelements, dem eine Indikation für Farbe oder keine Farbe zugewiesen werden muß, des maximalen und minimalen Parameterwertes bezüglich des Farbtons (H) und zum Berechnen der Differenz $((\Delta H)_{max})$ zwischen den beiden Parameterwerten und zur Berechnung des Mittelwertes für den Parameter, der sich auf die Sättigung (Cmean) bezieht, und

eine Einrichtung (16) zum Umwandeln einer zu einem Bildelement gehörenden provisorischen Indikation in eine Indikation dafür, daß es Farbe enthält, wenn diese Differenz $((\Delta H)_{max})$ und/oder dieser Mittelwert (Cmean) vorbestimmte Grenzen überschreitet.

**Revendications**

1.  Procédé d'affectation d'une indication montrant si un élément d'image devant former une image avec un système de reproduction en couleurs contient de la couleur ou aucune couleur, le procédé consistant à :

a. localiser ledit élément d'image dans un espace de couleurs (LCH ; HSL) qui est défini par des paramètres relatifs à la saturation (C, S), l'intensité (L) et la couleur (H), sur la base d'au moins les valeurs de paramètres dudit élément d'image concernant la saturation (C, S) et l'intensité (L) de couleur, en soit :

un premier sous-espace qui est considéré dans une zone où des éléments correspondants d'image contiennent de la couleur, soit
un deuxième sous-espace qui est considéré dans une zone où des éléments correspondants d'image ne contiennent pas de couleur, soit
un troisième sous-espace qui est considéré comme une zone d'incertitude où des éléments correspondants d'image sont incertains quant à contenir ou non une couleur,

b. affecter audit élément d'image :

une indication de contenu de couleur quand il est situé dans ledit premier sous-espace,
une indication d'absence de contenu de couleur quand il est situé dans ledit deuxième sous-espace, et
une indication provisoire d'incertitude par rapport à une présence ou une absence de contenu de couleur quand il est situé dans ledit troisième sous-espace ;

c. effectuer, par rapport audit élément d'image lorsqu'il est positionné dans ledit troisième sous-espace, une analyse de la distribution de valeurs de paramètres dudit sous-espace, pour des éléments d'image présents au voisinage dudit élément d'image,

le procédé étant **caractérisé par**

d. une modification de l'indication provisoire dudit élément d'image en une indication de couleur ou d'absence de couleur si au moins :

une valeur $(\sigma(H), \Sigma_i(H_{av} - H_i)^2)$ représentant la distribution des valeurs de paramètres relatives à la couleur (H) est respectivement supérieure ou inférieure à une constante prédéterminée (f, f*) ou, autrement, si la valeur moyenne (Cmean) des valeurs de paramètres relatives à la saturation de couleur (C, S) est respectivement supérieure ou inférieure à un certain seuil (b).

**2.** Procédé selon la revendication 1, **caractérisé en ce que** ledit état de distribution relative est un écart type $(\sigma(H))$ des valeurs de paramètres relatives à la couleur (H) d'élément d'image apparaissant au voisinage dudit élément d'image et que ladite limite prédéterminée est une constante (f) sélectionnée de manière appropriée.

**3.** Procédé selon la revendication 2, **caractérisé en ce que** l'écart type est donné par $\Sigma_i(H_{av} - H_i)^2$, $H_i$ étant la valeur de couleur du i-ième élément d'image dans ledit environnement, $H_{av}$ la valeur moyenne de couleur de tous les i éléments d'image dans ledit environnement.

**4.** Système de reproduction en couleurs, comprenant :

un module (5) de numérisation en couleurs pour numériser un document original à reproduire et produire des informations correspondantes de couleur,
un module (6) de traitement d'image et de commande pour corriger et traiter ces informations de couleur afin de produire des signaux de commande pour commander un module (7) d'impression en couleurs, ledit module (6) de traitement d'image et de commande étant conçu pour affecter une indication montrant si un élément d'image à imprimer par ledit module (7) d'impression en couleurs contient ou non de la couleur, le module (6) de traitement d'image et de commande comprenant :

a. des moyens (8) de mémoire ayant des informations concernant une indication de l'apparition de couleur à un élément d'image dans un espace de couleurs (LCH, HSL) qui est défini par des paramètres relatifs à la saturation (C, S), l'intensité (L) et la couleur (H), sur la base d'au moins les valeurs de paramètres dudit élément d'image concernant la saturation (C, S) et l'intensité (L) de couleur, les moyens (8) de mémoire étant capables de distinguer :

une indication qu'un élément d'image contient de la couleur si ledit élément d'image est situé dans une première zone à l'intérieur dudit espace de couleurs,
une indication qu'un élément d'image ne contient pas de couleur si ledit élément d'image est situé dans une deuxième zone à l'intérieur dudit espace de couleurs,
une indication provisoire d'incertitude quant à la présence ou à l'absence de couleur dans un élément d'image si ledit élément d'image est situé dans une troisième zone à l'intérieur dudit espace de couleurs,

**caractérisé en ce que** le module (6) de traitement d'image et de commande comprend en outre :

b. des moyens (14) de sélection pour sélectionner, pour chaque élément d'image, dans lesdits moyens (8) de mémoire, une indication que cet élément d'image contient de la couleur et affecter une telle indication audit élément d'image ;

c. des moyens (15) pour sélectionner, dans un voisinage prédéterminé d'un élément d'image auquel doit être affectée une indication de présence ou d'absence de couleur, la valeur maximale et minimale d'un paramètre relatif à la couleur (H) et calculer la différence ($(\Delta H)_{max}$) entre les deux valeurs de paramètres et calculer la valeur moyenne du paramètre relatif à la saturation (Cmean) ; et

des moyens (16) pour convertir une indication provisoire associée à un élément d'image en une indication de présence de couleur si ladite différence ($(\Delta H)_{max}$) et/ou ladite valeur moyenne (Cmean) dépassent des limites prédéterminées.

Fig.1

Fig.2

Fig.3

Fig.4

Fig.5

EP 0 593 114 B1